# EUROPEAN PATENT SPECIFICATION

(11) **EP 2 226 883 B1**
(45) Date of publication and mention of the grant of the patent: **24.04.2013**
(21) Application number: 10250278.8
(22) Date of filing: 17.02.2010
(51) Int. Cl.: H01M 8/04, H01M 8/10

(54) **Fuel cell system**
Brennstoffzellensystem
Système de pile à combustible

(30) Priority: 17.02.2009 US 153230 P; 16.12.2009 US 639948
(43) Date of publication of application: 08.09.2010
(73) Proprietor: Samsung SDI Co., Ltd., Gyeonggi-do (KR)
(72) Inventor: Yoon, Seong-Kee, Yongin-si Gyeonggi-do (KR); Joung, Young-Soo, Gyeonggi-do (KR); Park, Jung-Kurn, Yongin-si Gyeonggi-do (KR); Cho, Hye-Jung, Gyeonggi-do (KR); Song, In-Seob, Gyeonggi-do (KR)
(74) Representative: Taor, Simon Edward William

(56) References cited:
- EP-A1- 1 819 004
- EP-A1- 1 901 380
- WO-A2-2005/122304
- DE-A1-102004 052 806
- US-A1- 2003 148 151

## Description

### BACKGROUND OF THE INVENTION

### (a) Field of the Invention

The present invention relates to a fuel cell system.

### (b) Description of the Related Art

Fuel cells are devices that electrochemically generate power by using fuel (hydrogen or reformed gas) and oxidant (oxygen or air) and directly convert the fuel (hydrogen or reformed gas) and oxidant (oxygen or air) continuously supplied from the outside into electrical energy by an electrochemical reaction.

Pure oxygen or air containing a large amount of oxygen is used as the oxidant of the fuel cell and pure hydrogen or fuel containing a large amount of hydrogen, which is generated by reforming hydrocarbon-based fuel (LNG, LPG, CH₃OH, etc.) is used as the fuel.

Hereinafter, a direct methanol fuel cell (DMFC) will be primarily described for better comprehension and ease of description. The direct methanol fuel cell supplies high-concentration methanol to a fuel cell stack to generate electricity by reaction with the oxygen.

The direct methanol fuel cell uses high-concentration fuel to increase energy weight density. Water consumed in an anode is supplemented with water generated in a cathode in order to use the high-concentration fuel. In a known fuel cell system, fluids discharged from an outlet of the cathode are firstly condensed by a heat exchanger in order to recover the water generated in the cathode. Thereafter, the condensed fluids and non-reacted fuel discharged from the anode are separated into a liquid and gas by a gas-liquid separator. The gas separated by the gas-liquid separator is discharged to the outside and the liquid separated by the gas-liquid separator is mixed with the fuel and again supplied to the fuel cell stack.

In the known fuel cell system, condensed fluids and the non-reacted fuel are mixed with each other by the gas-liquid separator. Therefore, the non-reacted fuel that flows into the gas-liquid separator has a comparatively higher temperature than the condensed fluids. As a result, the condensed fluids are again vaporized upon being mixed with the non-reacted fuel.

When the condensed fluids are vaporized, water recovery efficiency is deteriorated, such that the size of the apparatus used for condensing the fluids discharged from the cathode must be increased so as to recover a proper amount of water.

Further, when the temperature is high in an external environment, a temperature in the gas-liquid separator further increases, such that the water recovery efficiency is further deteriorated.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a fuel cell system having an advantage of improving water recovery efficiency

In addition, the present invention has been made in an effort to provide a fuel cell system having another advantage of minimizing the volume.

The present invention provides a fuel cell system as set out In Claim 1.

As such, according to the present invention, water recovery efficiency is improved by cooling only the gas separated by the first gas-liquid separator and separating the liquid from the cooled fluids.

Preferred features of the invention are set out in Claims 2 to 12.

### BRIEF DESCRIPTION OF THE DRAWINGS

FIG. 1 is a schematic diagram illustrating a fuel cell system according to an embodiment of the present invention.
FIG. 2 is an exploded perspective view illustrating the structure of the fuel cell stack of the system shown in FIG. 1.
FIG. 3 is a schematic diagram illustrating a fuel cell system according to a second embodiment of the present invention.
FIG. 4 is a graph illustrating evaluation the operation of the stack of the fuel cell system shown in FIG. 1.
FIG. 5 is a graph illustrating a stack temperature and the temperature of non-reacted fuel discharged from the stack in the first embodiment of the present invention.
FIG. 6 is a schematic diagram illustrating a fuel cell system according to an arrangement.

### DETAILED DESCRIPTION

The present invention will be described more fully hereinafter with reference to the accompanying drawings, in which embodiments of the invention are shown. As those skilled in the art would realize, the described embodiments may be modified in various different ways, all without departing from the scope of the present invention.

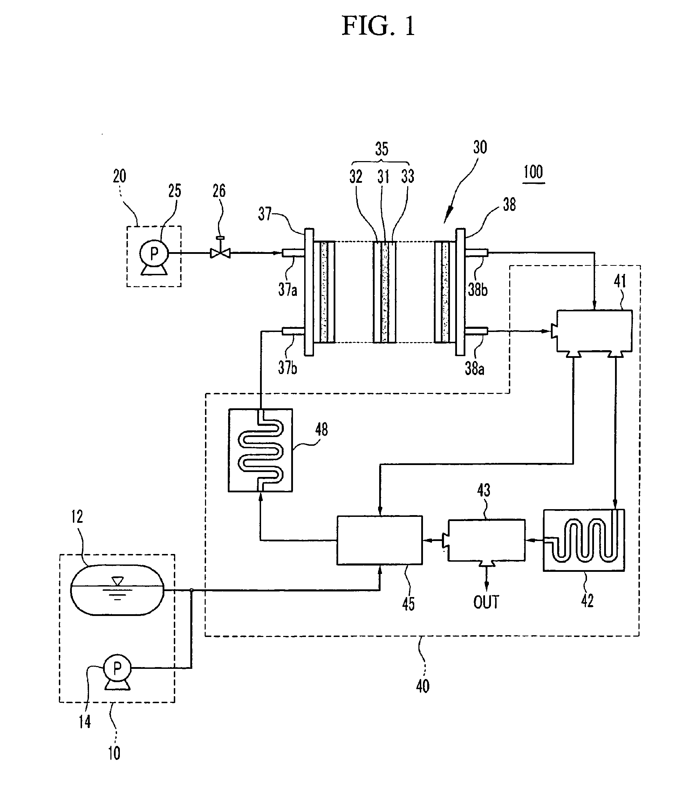

FIG. 1 is a schematic diagram illustrating a fuel cell system according to a first embodiment of the present invention.

This particular fuel cell system 100 according to an exemplary embodiment of the present invention may adopts a direct methanol fuel cell scheme that generates electrical energy by direct reaction of methanol and oxygen. However, the present invention is not limited thereto and alternative fuel cell systems according to the invention may, for example, adopt a direct oxidation fuel cell scheme that reacts liquid or gas fuel containing hydrogen, such as ethanol, liquefied petroleum gas (LPG), liquefied natural gas (LNG), gasoline, butane gas, etc. with oxygen. Furthermore, the fuel cell system may be configured by a polymer electrode fuel cell (PEMFC) that uses the fuel by reforming it into reformed gas containing sufficient hydrogen.

The fuel used in the fuel cell system 100 generally takes the form of hydrocarbon-based fuel in a liquid or gas state, such as methanol, ethanol, natural gas, LPG, etc. The fuel cell system 100 may use oxygen gas stored in an additional storing means or air as oxidant that reacts with hydrogen.

The fuel cell system 100 according to this embodiment of the invention includes a fuel cell stack 30 that generates power by using the fuel and the oxidant, a fuel supply unit 10 that supplies the fuel to the fuel cell stack 30, an oxidant supply unit 20 that supplies the oxidant to the fuel cell stack 30, and a recovery unit 40 that recovers a non-reacted fuel and moisture discharged from the fuel cell stack 30 and resupplies the non-reacted fuel and the moisture to the fuel cell stack 30.

The fuel supply unit 10 is connected with the fuel cell stack 30 and includes a fuel tank 12 that stores liquefied fuel and a fuel pump 14 that is connected to the fuel tank 12. The fuel pump 14 serves to discharge the liquefied fuel stored in the fuel tank 12 from the inside of the fuel tank 12 by a predetermined pumping force. In this embodiment, the fuel stored in the fuel supply unit 10 may consist of high-concentration methanol containing approximately 100% MeOH.

The oxidant supply unit 20 is connected with the fuel cell stack 30 and includes an oxidant pump 25 that suctions external air and supplies the external air to the fuel cell stack 30 by the predetermined pumping force. An optional oxidant control valve 26 that controls a supply quantity of the oxidant is installed between the fuel cell stack 30 and the oxidant supply unit 20.

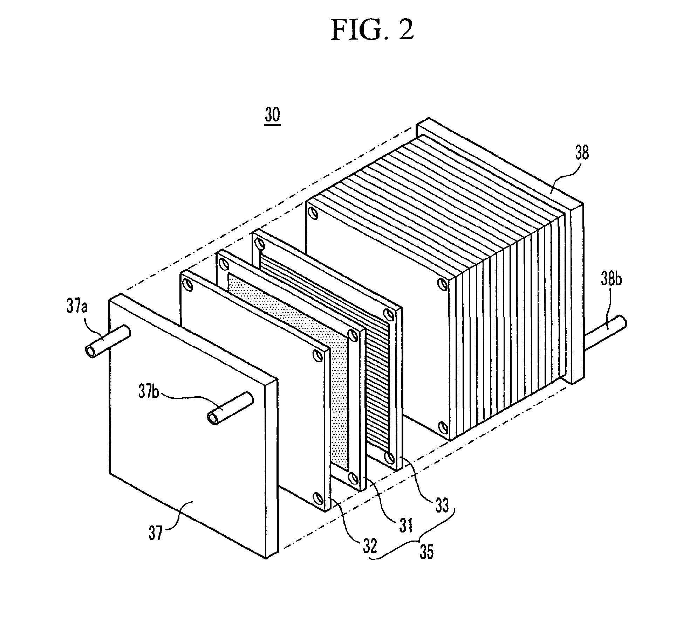

FIG. 2 is an exploded perspective view illustrating a structure of the fuel cell stack shown in FIG. 1.

Referring to FIGS. 1 and 2, the fuel cell stack 30 adopted in the fuel cell system 100 includes a plurality of electricity generating units 35 that generate electrical energy by inducing oxidation and reduction reactions of the fuel and the oxidant.

Each of the electricity generating unit 35 represents a unit cell that generates the electricity and includes a membrane-electrode assembly (MEA) 31 and separators (also referred to as a bipolar plate in the art) 32 and 33 that supply the fuel and the oxidant to the membrane-electrode assembly 31.

The electricity generating unit 35 has a structure in which the separators 32 and 33 are disposed on either side of the membrane-electrode assembly 31. The membrane-electrode assembly 31 includes an electrolyte membrane disposed at the center thereof, a cathode electrode disposed at one side of the electrolyte membrane, and an anode electrode disposed at the other side of the electrolyte membrane.

The separators 32 and 33 are disposed adjacent each other with the membrane-electrode assembly 31 interposed therebetween. The separators 32 and 33 each have a fuel passage and an air passage at both sides of the membrane-electrode assembly 31. The fuel passage is disposed at the anode electrode of the membrane-electrode assembly 31 and the air passage is disposed at the cathode electrode of the membrane-electrode assembly 31. The electrolyte membrane enables ion exchange in which hydrogen ions generated from the anode electrode move to the cathode electrode and are bound to oxygen of the cathode electrode to generate water.

Therefore, in the anode electrode, the hydrogen is resolved into electrons and protons (hydrogen ions) by an oxidation reaction. Further, the protons moves to the cathode electrode through the electrolyte membrane and the electrons do not move through the electrolyte membrane and moves to the cathode electrode of the adjacent membrane-electrode assembly 31 through the separator 33. At this time, flow of the electrons generates current. Further, in the cathode electrode, moisture is generated by a reduction reaction of the moved protons and electrons, and the oxygen.

In the fuel cell system 100, the plurality of electricity generating units 35 are successively arranged to constitute the fuel cell stack 30. Herein, end plates 37 and 38 for integrally fixing the fuel cell stack 30 are installed in outermost parts of the fuel cell stack 30.

A first inlet 37a for supplying the oxidant to the stack 30 and a second inlet 37b for supplying the fuel to the fuel cell stack 30 are formed in one end plate 37. Further, a first outlet 38a for discharging non-reacted air containing moisture generated by bonding reaction of hydrogen and oxygen in the cathode electrode of the membrane-electrode assembly 31 and a second outlet 38b for discharging non-reacted fuel after reaction in the anode electrode of the membrane-electrode assembly 31 are formed in the other end plate 38.

Meanwhile, the recovery unit 40 includes a first gas-liquid separator 41 that collects the fluids discharged from the discharging units 38a and 38b and separates them into gas and liquid, a first heat exchanger 42 that cools the gas discharged from the first gas-liquid separator 41, a second gas-liquid separator 43 that separates the fluids discharged from the first heat exchanger 42 into gas and liquid, and a mixer 45 that mixes the liquid transferred from the second gas-liquid separator 43 and the liquid transferred from the first gas-liquid separator 41.

The first gas-liquid separator 41 installed at an outlet side of the fuel cell stack 30 may be composed of a centrifugal pump, an electrokinetic pump or separation membrane. The first gas-liquid separator 41 mixes the non-reacted fuel discharged from the second outlet 38b with the non-reacted oxidant containing the moisture discharged from the first outlet 38a to separate the mixed non-reacted fuel and air into liquid and gas.

The gas discharged from the first gas-liquid separator 41 moves to the first heat exchanger 42 and the liquid moves to the mixer 45. The first heat exchanger 42 cools the gas discharged from the first gas-liquid separator 41 and condenses the gas into liquid. The non-reacted fuel and moisture discharged from the fuel cell stack 30 have a high temperature. Therefore, the gas is condensed into liquid in order to decrease the temperature of the gas in the first heat exchanger 42.

The liquid and the gas that are condensed in the first heat exchanger 42 are transferred to the second gas-liquid separator 43. The second gas-liquid separator 43 may be composed of the centrifugal pump or the electrokinetic pump like the first gas-liquid separator 41.

The liquid discharged from the second gas-liquid separator 43 moves to the mixer 45 and the gas is discharged to the outside. The liquid transferred from the first gas-liquid separator 41 and the second gas-liquid separator 43 flows into the mixer 45. The liquid exists which contains the non-reacted fuel and the moisture mixed with each other. Further, high-concentration fuel transferred from the fuel supply unit 10 flows into the mixer 45 and the high-concentration fuel is converted into proper-concentration fuel containing the moisture in the mixer 45.

The mixed fuel is transferred to the second heat exchanger 48. Therefore, the second heat exchanger 48 decreases the temperature of the fuel and supplies the fuel to the fuel cell stack 30.

When the liquid is separated by the first gas-liquid separator 41 and the gas is cooled by the first heat exchanger 42, it is possible to prevent the fuel from being vaporized due to a difference in the temperature between the non-reacted fuel and the non-reacted air.

In the prior art, when the non-reacted air and the non-reacted fuel are mixed and separated in a gas-liquid separator after the non-reacted air is condensed, the non-reacted air having a comparatively lower temperature is heated, such that the condensed liquid is vaporized. When the condensed liquid is vaporized, the condensing effect upon the non-reacted air decreases and consequently the condenser must have a higher volume.

However, in the present embodiment, where only the gas is cooled after the gas and the liquid have been separated from each other, the size of the heat exchanger can be much smaller in comparison with a known device that cools both the liquid and the gas. Further, as described above, since the heat exchanger is composed of two stages, the size of the first heat exchanger 42 can be very small in comparison with the known heat exchanger.

Further, the fluids discharged from the first heat exchanger 42 flow into the second gas-liquid separator 43 to separate the gas and the liquid, whereby recovery efficiency of water is improved in comparison with the related art. When the heat exchangers of the same volumes are employed, the recovery efficiency of water improves about 30%. This is because that the liquid is firstly separated in the first gas-liquid separator 41 and the cooled fluids are separated into the liquid and the gas in the second gas-liquid separator 43.

Further, the fluids discharged from the mixer 45 are cooled by the second heat exchanger 48. Therefore, the temperature of the fuel that flows into the second inlet 37b through the second heat exchanger 48 can be properly controlled. In particular, when the temperature is decreased by stages by installing two heat exchangers, the temperature can be further decreased and the size of the heat exchanger may be formed smaller in comparison with a case in which one heat exchanger is used. That is, according to this embodiment, the total size of two heat exchangers is smaller than the size of one known heat exchanger.

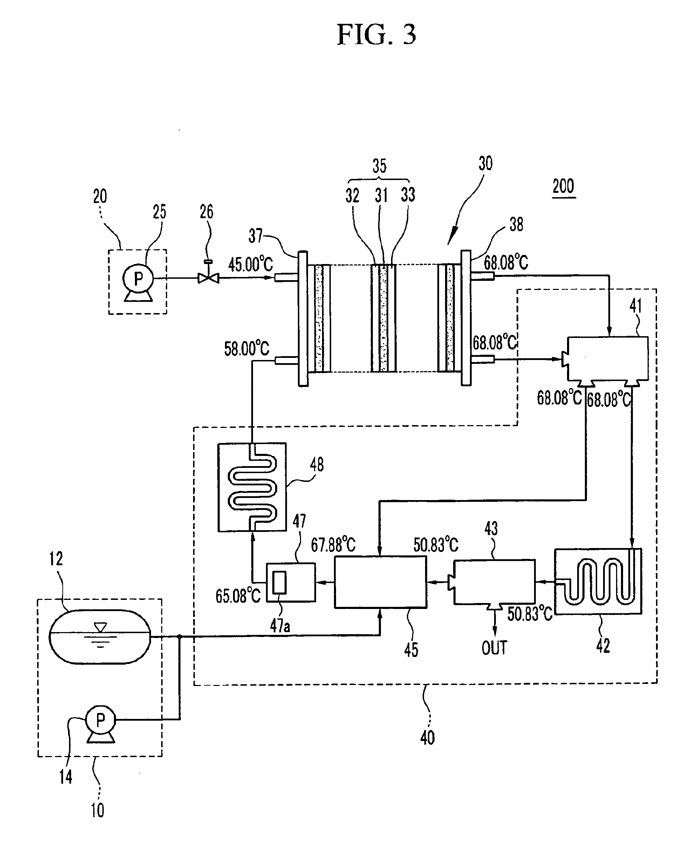

FIG. 3 is a schematic diagram of a fuel cell system according to a second embodiment of the present invention.

Referring to FIG. 3, the fuel cell system 200 according to the second embodiment additionally includes a buffer device 47 that is installed between the mixer 45 and the second heat exchanger 48.

Except for the buffer device 47, the fuel cell system 200 according to the second embodiment has the same structure as the fuel cell system according to the first embodiment. Therefore, the same structure will not be repetitively described.

The buffer device 47 serves to temporarily store the fuel so as to supply fuel of a predetermined amount to the fuel cell stack 30. A filter 47a for intercepting impurities from flowing into the fuel cell stack 30 is installed in the buffer device 47. The filter 47a may include various kinds that filter the impurities contained in the liquid.

By considering a result of operating the fuel cell system 200 according to the second embodiment under an external environment of 45°C, the temperature of the fluids in each part will be described below.

The non-reacted fuel and the non-reacted air that are discharged from the fuel cell stack 30 have a comparatively high temperature of 68.08°C. The liquid and the gas discharged from the first gas-liquid separator 41, into which the fluids are separated by the first gas-liquid separator 41, have the temperature of 68.08°C. Thereafter, the gas is cooled to 50.83°C by the first heat exchanger 42.

The fluids cooled by the first heat exchanger 42 are separated into the liquid and the gas by the second gas-liquid separator 43. In this case, the temperature of the fluids discharged from the second gas-liquid separator 43 is 50.83°C. The liquid discharged from the second gas-liquid separator 43 flows into the mixer 45. At this time, the liquid discharged from the second gas-liquid separator 43 is mixed with the liquid separated by the first gas-liquid separator 41, such that the temperature of the fluid increases to 67.88°C. The temperature of the fluid discharged from the mixer 45 decreases to 65.08°C through the buffer device and the temperature of the fluid passing through the buffer device again decreases to 58°C through the second heat exchanger 48, such that the fluid is supplied to the fuel cell stack.

As described above, the first heat exchanger 42 serves to condense the gas into the liquid and the second heat exchanger 48 serves to decrease the temperature of the fuel that flows into the fuel cell stack 30, thereby easily controlling the temperature of the fuel that flows into the fuel cell stack 30.

As such, when the temperature of the fuel that flows into the fuel cell stack 30 is controlled, it is possible to easily control the internal temperature of the fuel cell stack 30 and properly control the temperature of the fluid discharged from the fuel cell stack 30.

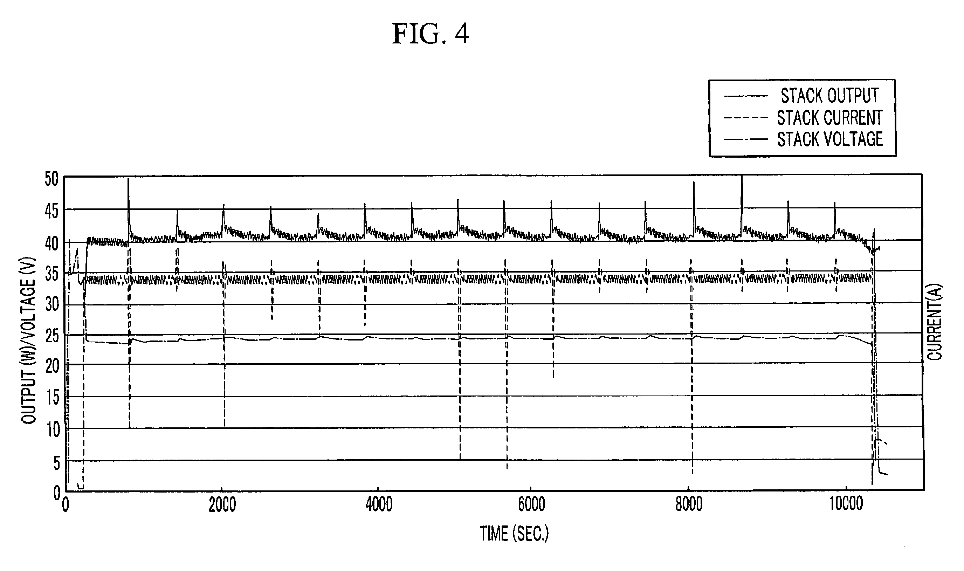

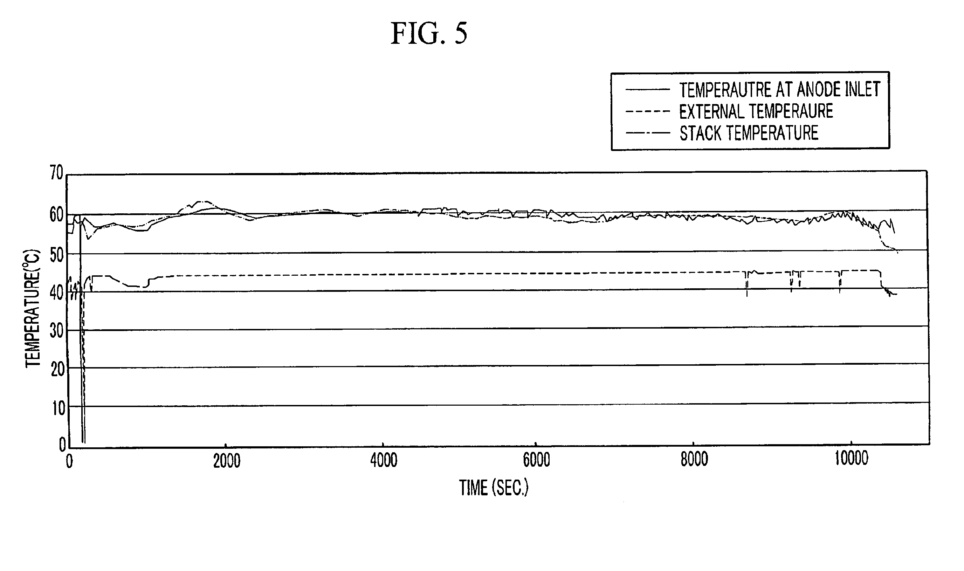

FIG. 4 is a graph illustrating evaluation of the stack operation of the fuel cell system according to the first exemplary embodiment of the present invention. FIG. 5 is a graph illustrating a temperature of the stack and temperature of non-reacted fuel discharged from the stack in the first embodiment of the present invention.

FIGS. 4 and 5 illustrate an operating result of the fuel cell system according to the first embodiment of the present invention under an external temperature of 15°C. A fuel cell used in a test is characterized as system output 25W (stack output 36W), system voltage 16.4V, diluted fuel flow rate 25cc/min, weight 1.8kg. As shown in FIG. 4, the fuel cell system according to the first embodiment has a stable output.

Further, referring to FIG. 5, when the external temperature is 45°C, the temperature of the stack is constantly maintained approximately 60°C or less. When the heat exchanger of the same volume is employed in the prior art fuel cell, the temperature of the stack becomes 65°C or more.

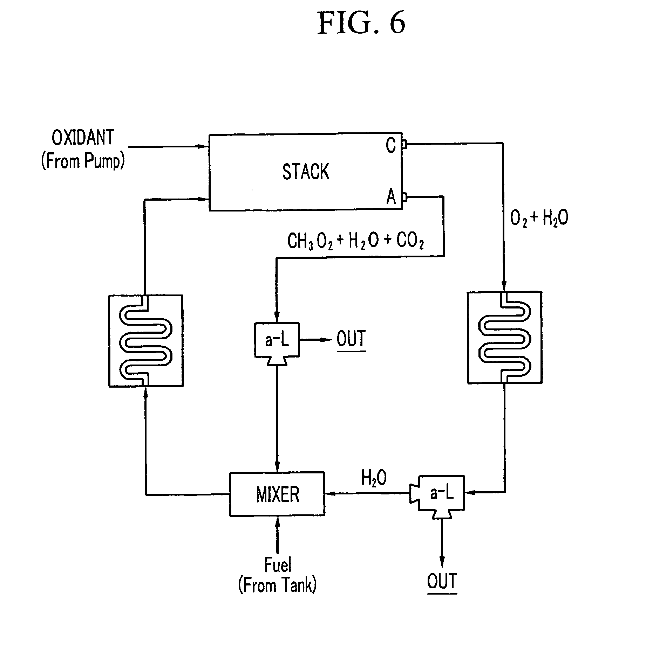

FIG. 6 is a schematic view of part of a fuel cell system according to an arrangement.

In this arrangement, the first outlet 38A is for discharging non-reacted air containing moisture generated by the bonding reaction of hydrogen oxygen in the cathode electrode of the membrane - electrode assembly. The second outlet 38B is for discharging non-reacted fuel after reaction in the membrane electrode assembly. As in previous embodiments, the system also comprises a first heat exchanger 42, a second heat exchanger 48, a first gas liquid separator 41 and a second gas liquid separator 43. A Mixer 45 is also provided.

The principal difference between this arrangement and the first embodiment is that the output from the first outlet 38A is not fed into the first gas liquid separator 41, but instead directly into the first heat exchanger 42.

The components still perform the same functions as in the first embodiment, but the different is this case is that the mixture flowing into the first heat exchanger will not have previously had a gas element removed. Therefore, the gas/liquid separation is less efficient than in the first embodiment. However, this arrangement does still provide an advantage over the prior art in that re-vaporization of the liquid elements is avoided because the mixture of the components from the first and second outlet takes place in the mixer, rather than in a gas liquid separator.

As such, according to embodiments of the present invention, it is possible to properly control the internal temperature of the stack and achieve the stable output.

While this invention has been described in connection with what is presently considered to he practical embodiments, it is to be understood that the invention is not limited to the disclosed embodiments, but, on the contrary, is intended to cover various modifications and equivalent arrangements included within the scope of the appended claims.

## Claims

1. A fuel cell system comprising:
a fuel cell stack (30) adapted to generate electrical energy by an electrochemical reaction of fuel and oxidant, the fuel-cell stack (30) having an anode-side outlet and a cathode-side outlet;
a fuel supply unit (10) adapted to supply the fuel for use in the fuel cell stack (30);
an oxidant supply unit (20) adapted to supply the oxidant for use in the fuel cell stack (30);
a first gas-liquid separator (41) adapted to receive fluids discharged from the anode-side outlet and the cathode-side outlet of the fuel cell stack (30) and separate the fluids into a gas and a liquid;
a first heat exchanger (42) arranged to receive gas from the first gas-liquid separator (41);
a second gas-liquid separator (43) adapted to separate the fluids cooled by the first heat exchanger (42) into a liquid and a gas; and
a mixer (45) adapted to mix the fuel supplied from the fuel supply unit (10) with the liquids separated by the first and second gas-liquid separators (41, 43).

2. A fuel cell system according to claim 1, wherein the anode-side outlet and the cathode-side outlet of the fuel cell stack are connected to the first gas-liquid separator (41).

3. A fuel cell system according to any preceding claim, wherein a gas outlet of the first gas-liquid separator (41) is connected to the first heat exchanger and a liquid outlet of the first gas-liquid separator Is connected to the mixer.

4. A fuel cell system according to any preceding claim, wherein an outlet of the first heat exchanger (41) is connected to an inlet of the second gas-liquid separator (43).

5. A fuel cell system according to any preceding claim, further comprising a second heat exchanger (48) adapted to cool the mixed fuel and liquids provided from the mixer (45).

6. A fuel cell system according to claim 5, wherein an outlet of the second heat exchanger (48) is connected to an inlet of the fuel cell stack (30).

7. A fuel cell system according to claim 5 or 6, wherein an outlet of the mixer (45) is connected to the second heat exchanger (48).

8. A fuel cell system according to claim 5 or 6, further comprising a buffer device (47), wherein an outlet of the mixer is connected to an inlet of the buffer device (47) and an outlet of the buffer device (47) is connected to an inlet of the second heat exchanger (48); the buffer device (47) being adapted to store liquid received from the mixer (45) and supply a predetermined amount thereof to the second heat exchanger (48).

9. A fuel cell according to claim 8, wherein the said buffer device (47) comprises a filter.

10. A fuel cell system according to any preceding claim, wherein a gas outlet of the second gas-liquid separator (43) acts as an exhaust and a liquid outlet of the second gas-liquid separator (43) is connected to the mixer (45).

11. A fuel cell system according to any preceding claim, wherein an outlet of the fuel supply unit (10) is connected to the mixer (45).

12. A fuel cell system according to any preceding claim, wherein the fuel cell system is a direct methanol fuel cell system.

## Patentansprüche

1. Brennstoffzellensystem, umfassend:
einen Brennstoffzellenstapel (30), der zum Erzeugen elektrischer Energie durch eine elektrochemische Reaktion von Brennstoff und Oxidationsmittel ausgebildet ist, wobei der Brennstoffzellenstapel (30) einen anodenseitigen Auslass und einen kathodenseitigen Auslass aufweist;
eine Brennstoffzuführungseinheit (10), die zum Zuführen des Brennstoffs zur Verwendung in dem Brennstoffzellenstapel (30) ausgebildet ist;
eine Oxidationsmittelzuführungseinheit (20), die zum Zuführen des Oxidationsmittels zur Verwendung in dem Brennstoffzellenstapel (30) ausgebildet ist;
einen ersten Gas-Flüssigkeit-Separator (41), der zur Aufnahme von aus dem anodenseitigen Auslass und dem kathodenseitigen Auslass des Brennstoffzellenstapels (30) austretenden Fluiden sowie zum Trennen der Fluide in ein Gas und eine Flüssigkeit ausgebildet ist;
einen ersten Wärmetauscher (42), der zur Aufnahme von Gas aus dem ersten Gas-Flüssigkeit-Separator (41) angeordnet ist;
einen zweiten Gas-Flüssigkeit-Separator (43), der zum Trennen der durch den ersten Wärmetauscher (42) abgekühlten Fluide in eine Flüssigkeit und ein Gas ausgebildet ist; und
einen Mischer (45), der zum Mischen des von der Brennstoffzuführungseinheit (10) zugeführten Brennstoffs mit den durch den ersten und zweiten Gas-Flüssigkeit-Separator (41, 43) getrennten Flüssigkeiten ausgebildet ist.

2. Brennstoffzellensystem nach Anspruch 1, wobei der anodenseitige Auslass und der kathodenseitige Auslass des Brennstoffzellenstapels mit dem ersten Gas-Flüssigkeit-Separator (41)verbunden sind.

3. Brennstoffzellensystem nach einem der vorstehenden Ansprüche, wobei ein Gasauslass des ersten Gas-Flüssigkeit-Separators (41) mit dem ersten Wärmetauscher verbunden ist und ein Flüssigkeitsauslass des ersten Gas-Flüssigkeit-Separators mit dem Mischer verbunden ist.

4. Brennstoffzellensystem nach einem der vorstehenden Ansprüche, wobei ein Auslass des ersten Wärmetauschers (41) mit einem Einlass des zweiten Gas-Flüssigkeit-Separators (43) verbunden ist.

5. Brennstoffzellensystem nach einem der vorstehenden Ansprüche, ferner umfassend einen zweiten Wärmetauscher (48), der zum Abkühlen der von dem Mischer (45) bereitgestellten gemischten Brennstoffe und Flüssigkeiten ausgebildet ist.

6. Brennstoffzellensystem nach Anspruch 5, wobei ein Auslass des zweiten Wärmetauschers (48) mit einem Einlass des Brennstoffzellenstapels (30) verbunden ist.

7. Brennstoffzellensystem nach Anspruch 5 oder 6, wobei ein Auslass des Mischers (45) mit dem zweiten Wärmetauscher (48) verbunden ist.

8. Brennstoffzellensystem nach Anspruch 5 oder 6, ferner umfassend eine Puffervorrichtung (47), wobei ein Auslass des Mischers mit einem Einlass der Puffervorrichtung (47) verbunden ist und ein Auslass der Puffervorrichtung (47) mit einem Einlass des zweiten Wärmetauschers (48) verbunden ist; wobei die Puffervorrichtung (47) zum Speichern von von dem Mischer (45) erhaltener Flüssigkeit sowie zum Zuführen einer vorbestimmten Menge hiervon an den zweiten Wärmetauscher (48) ausgebildet ist.

9. Brennstoffzellensystem nach Anspruch 8, wobei die Puffervorrichtung (47) einen Filter umfasst.

10. Brennstoffzellensystem nach einem der vorstehenden Ansprüche, wobei ein Gasauslass des zweiten Gas-Flüssigkeit-Separators (43) als ein Auspuff wirkt und ein Flüssigkeitsauslass des zweiten Gas-Flüssigkeit-Separators (43) mit dem Mischer (45) verbunden ist.

11. Brennstoffzellensystem nach einem der vorstehenden Ansprüche, wobei ein Auslass der Brennstoffzuführungseinheit (10) mit dem Mischer verbunden ist.

12. Brennstoffzellensystem nach einem der vorstehenden Ansprüche, wobei das Brennstoffzellensystem ein Direktmethanolbrennstoffzellensystem ist.

## Revendications

1. Système de pile à combustible, comprenant :
l'empilement de pile à combustible (30) conçu pour générer de l'énergie électrique par une réaction électrochimique d'un combustible et d'un oxydant, l'empilement de pile à combustible (30) ayant un orifice de sortie du côté de l'anode et un orifice de sortie du côté de la cathode ;
une unité d'alimentation en combustible (10) conçue pour fournir le combustible pour une utilisation dans l'empilement de pile à combustible (30) ;
une unité d'alimentation en oxydant (20) conçue pour fournir l'oxydant pour une utilisation dans l'empilement de pile à combustible (30) ;
un premier séparateur gaz-liquide (41) conçu pour recevoir les fluides déchargés de l'orifice de sortie du côté de l'anode et de l'orifice de sortie du côté de la cathode de l'empilement de pile à combustible (30) et pour séparer les fluides en un gaz et un liquide ;
un premier échangeur de chaleur (42) agencé pour recevoir le gaz provenant du premier séparateur gaz-liquide (41) ;
un second séparateur gaz-liquide (43) conçu pour séparer les fluides refroidis par le premier échangeur de chaleur (42) en un liquide et un gaz ; et
un mélangeur (45) conçu pour mélanger le combustible fourni par l'unité d'alimentation en combustible (10) avec les liquides séparés par les premier et second séparateurs gaz-liquide (41, 43).

2. Système de pile à combustible suivant la revendication 1, dans lequel l'orifice de sortie du coté de l'anode et l'orifice de sortie du côté de la cathode de l'empilement de pile à combustible sont connectés au premier séparateur gaz-liquide (41).

3. Système de pile à combustible suivant l'une quelconque des revendications précédentes, dans lequel un orifice de sortie de gaz du premier séparateur gaz-liquide (41) est connecté au premier échangeur de chaleur et un orifice de sortie de liquide du premier séparateur gaz-liquide est connecté au mélangeur.

4. Système de pile à combustible suivant l'une quelconque des revendications précédentes, dans lequel un orifice de sortie du premier échangeur de chaleur (41) est connecté à un orifice d'admission du second séparateur gaz-liquide (43).

5. Système de pile à combustible suivant l'une quelconque des revendications précédentes, comprenant en outre un second échangeur de chaleur (42) conçu pour refroidir le mélange de combustible et de liquides fourni par le mélangeur (45).

6. Système de pile à combustible suivant la revendication 5, dans lequel un orifice de sortie du second échangeur de chaleur (48) est connecté à un orifice d'admission de l'empilement de pile à combustible (30).

7. Système de pile à combustible suivant la revendication 5 ou 6, dans lequel un orifice de sortie du mélangeur (45) est connecté au second échangeur de chaleur (48).

8. Système de pile à combustible suivant la revendication 5 ou 6, comprenant en outre un dispositif tampon (47), dans lequel un orifice de sortie du mélangeur est connecté à un orifice d'admission du dispositif tampon (47) et un orifice de sortie du dispositif tampon (47) est connecté à un orifice d'admission du second échangeur de chaleur (48) ; le dispositif tampon (47) étant conçu pour stocker le liquide reçu à partir du mélangeur (45) et pour fournir une quantité prédéterminée de ce liquide au second échangeur de chaleur (48).

9. Pile à combustible suivant la revendication 8, dans lequel ledit dispositif tampon (47) comprend un filtre.

10. Système de pile à combustible suivant l'une quelconque des revendications précédentes, dans lequel un orifice de sortie de gaz du second séparateur gaz-liquide (43) joue le rôle d'orifice d'évacuation et un orifice de sortie de liquide du second séparateur gaz-liquide (43) est connecté au mélangeur (45).

11. Système de pile à combustible suivant l'une quelconque des revendications précédentes, dans lequel un orifice de sortie de l'unité d'alimentation en combustible (10) est connecté au mélangeur (45).

12. Système de pile à combustible suivant l'une quelconque des revendications précédentes, ledit système de pile à combustible étant un système de pile à combustible au méthanol direct.
